(19) **Europäisches Patentamt**

**European Patent Office**

**Office européen des brevets**

(11) **EP 0 906 234 B1**

(12) **EUROPEAN PATENT SPECIFICATION**

(45) Date of publication and mention
of the grant of the patent:
**28.03.2001 Bulletin 2001/13**

(51) Int Cl.⁷: **B65G 51/04**, B61B 13/10

(21) Application number: **95938875.2**

(86) International application number:
**PCT/US95/13727**

(22) Date of filing: **23.10.1995**

(87) International publication number:
**WO 97/15515 (01.05.1997 Gazette 1997/19)**

(54) **TRANSPORTATION SYSTEM FOR RIDER PROPELLED VEHICLES**

TRANSPORTSYSTEM FÜR FAHRZEUGE DIE VOM FAHRER ANGETRIEBEN WERDEN

SYSTEME DE TRANSPORT POUR VEHICULE MU PAR SON CONDUCTEUR

(84) Designated Contracting States:
**AT BE DE DK FR GB GR IT NL SE**

(43) Date of publication of application:
**07.04.1999 Bulletin 1999/14**

(73) Proprietor: **Senior, III, Milnor, H.**
**Denver, CO 80231 (US)**

(72) Inventor: **Senior, III, Milnor, H.**
**Denver, CO 80231 (US)**

(74) Representative: **McCarthy, Denis Alexis et al**
**MacLachlan & Donaldson**
**47 Merrion Square**
**Dublin 2 (IE)**

(56) References cited:
**US-A- 3 724 691**    **US-A- 3 859 682**
**US-A- 4 027 596**    **US-A- 4 078 498**
**US-A- 4 821 647**

**Description**

Field of the Invention

This invention relates to transportation modes, and, more particularly, relates to transportation systems and methods for rider propelled vehicles such as bicycles.

Background of the Invention

The movement by various agencies to plan and provide for transportation systems which encourage and accommodate multiple modes of urban travel (multi-modal transportation system planning), including private motor vehicular, self-propelled (such as bicycles), pedestrian, and mass transit modes and corridors, has gained momentum in recent years. One key element of such planning is the provision of multi-nodal systems, that is, transportation systems that provide links between the various modes of movement in the system (for example, the provision of central mass transit stations linked to both major thoroughfares and at the hubs of an urban bus system).

Left out of much of this planning, however, has been consideration for linking the so called "bike-way" element of such plans into the multi-nodal system in such a way as to encourage the use of rider propelled (non-motorized) transportation as a primary mode of transportation in the system, rather than as a mere means of entertainment or recreation. In particular, such bikeways are typically not provided in sufficient number, with sufficient separation from vehicular facilities or with sufficient links to other modes to make their use practical for commuting, access to shopping facilities and the like. This has been due, in part, to the expense and/or difficulty of acquiring ways of access (easements) for bike-way construction, particularly in more congested and/or long developed urban areas, and to the costs of construction and maintenance.

Moreover, little consideration has been given to providing bike-way systems which lessen the physical impacts inherent in use of such a system, including weather related impacts and the physical exertion necessary to move over longer distances, such systems being exposed to the elements and typically following whatever terrain happens to be available for the facility.

It is apparent that for such non-motorized modes of transportation to become primary in use, and for urban areas to thus receive the benefits of reduced reliance on the private automobile, improvement of the bike-way element of multi-modal transportation systems is necessary. However, for such improvements to be adopted, the costs associated with an improved bike-way element must be reasonably related to the projected benefits, preferably adding little if any expense to current per mile aggregate acquisition, construction and maintenance costs.

US 3 859 682 discloses a tubular transportation element comprising a tube having at least one wall of plastic in one continuous piece, at least one deck member for vehicle traffic or other transportation. This document does not disclose any means for assisting vehicles especially self-propelled vehicles through the transportation element.

US 4 078 498 discloses a low pressure air propelled transportation system for moving a vehicle or object through a conduit. The system only provides for the transportation of objects or vehicles which are limited in size and weight. The system does not provide for the propulsion of vehicles for carrying people especially rider propelled vehicles.

The invention is defined in the appended claims 1 to 16.

This invention provides an improved transportation system for rider propelled vehicles, the system being especially well adapted for urban use and for urban systems, though use can as well be made of the herein disclosed system for non-urban travel.

The transportation system requires less easement area to install, is adapted for use in congested urban areas, can be sited independently from streets and highways, is protected from adverse weather conditions, and is provided with multiple means calculated to lessen the physical exertion necessary for movement of a vehicle therealong. It is projected, that with increased use of the system, the overall cost of this system, relative to acquisition, installation, and maintenance costs of existing types of bike-way systems and other transportation modes in an urban transportation system, will have a beneficial impact on the overall transportation budget in an urban area where it is utilized.

The system includes a passage structure for movement therethrough of user propelled vehicles. Air movers are mounted on the structure to provide air flow at a velocity and in a direction to aid movement of a vehicle while yet retaining a substantially constant overall air pressure in the passage structure. The surface, or pathway, over which the vehicles move is covered to keep out naturally occurring precipitation and or winds, and the structure is preferably elevated to provide selected grade characteristics independent of the grade at the site of installation.

Multiple passageways are provided in the structure, each passageway having a different, substantially opposite, air flow direction thereby accommodating two way traffic. The structure is preferably modular in design.

It is therefore an object of this invention to provide an improved transportation system for rider propelled vehicles.

It is another object of this invention to provide an improved transportation system that requires less easement area to install, is adapted for use in congested urban areas, can be sited independently from streets and highways, is protected from adverse weather conditions, and is provided with multiple means calculated to lessen the physical exertion necessary for movement of a vehicle therealong.

It is still another object of this invention to provide a transportation structure for rider propelled vehicles which includes a covered pathway throughout the full extent of the distance between point of departure and destination.

It is yet another object of this invention to provide a transportation structure which is elevated for the purpose of controlling grade of a rider surface without disrupting grade of the terrain at a site of installation.

It is still another object of this invention to provide a transportation system which includes a passage structure including a surface for movement thereover of the vehicle and means for moving air through the passage structure in a direction and at a velocity sufficient to aid movement of the vehicle through the passage structure while retaining a substantially constant overall air pressure in the passage structure between an entryway thereto and a way of egress therefrom.

It is yet another object of this invention to provide a transportation system for aiding movement of rider propelled vehicles including a covered structure having first and second passageways and a surface for movement thereover of the vehicles.

It is still another object of this invention to provide a transportation system for aiding movement of rider propelled vehicles which includes a vehicle passage structure which is comprised of a plurality of modular passage, or tunnel, segments.

With these and other objects in view, which will become apparent to one skilled in the art as the description proceeds, this invention resides in the novel system, construction, combination and arrangement of parts substantially as hereinafter described, and more particularly defined by the appended claims, it being understood that changes in the precise embodiment of the herein disclosed invention are meant to be included as come within the scope of the claims.

Brief Description of the Drawings

The accompanying drawings illustrate a complete embodiment of the invention according to the best mode so far devised for the practical application of the principles thereof, and in which:

FIGURE 1 is a side view illustrating diagrammatically the system of this invention;
FIGURE 2 is a sectional view taken through section lines 2-2 of FIGURE 1;
FIGURE 3 is a block diagram showing spacing of air movers advantageously used in the system;
FIGURE 4 is a diagram illustrating branch angles for air inlet;
FIGURE 5 is a block diagram of air handling systems utilized in this invention;
FIGURE 6 is an illustration of a medial entrance to or exit from the system; and
FIGURE 7 in a diagrammatic illustration of a larger multi-lane system in accord with this invention.

Description of the Invention

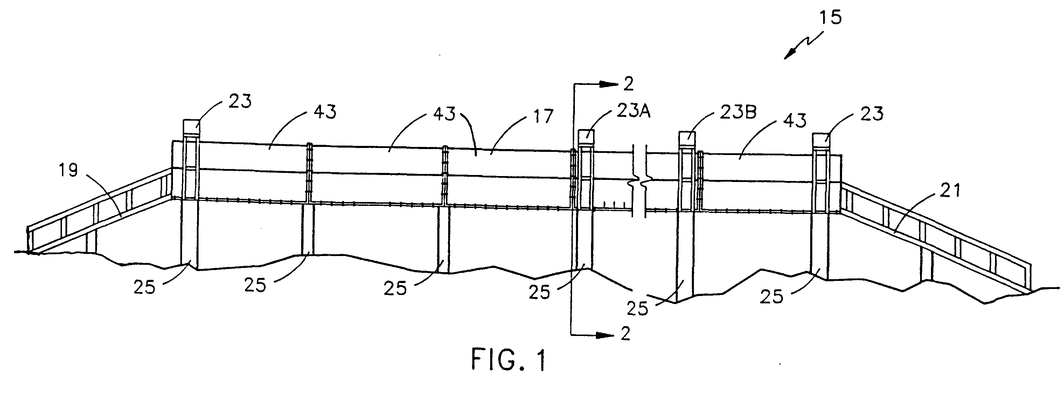

Figure 1 is an illustration of the transportation system 15 of this invention erected on a site having varied terrain (the system of this invention as illustrated in FIGURE 1 is, like any bike-way system, intended to cover substantial distances, certainly in excess of 1000 meters in any given segment, and is elevated for grade control and for siting considerations, as more fully discussed hereinafter, and not merely an overpass structure for example). While the system of FIGURE 1 is shown to be elevated, elevation is but one of the improvements discussed herein and need not be utilized in every application.

System 15 includes passage structure, or tunnel, 17 providing a pathway for rider propelled vehicles, such as bicycles. Access ways 19 and 21 provide rider entry into and egress from structure 17. Air movers, or fan units (preferably vane axial blower fans), 23 are beneficially provided to create air flow in the direction of vehicle movement (one or two way movement) through structure 17, the air flow being of a velocity sufficient to aid movement of the vehicle. While top-mounting of the fan units is shown, the fan units could be mounted at grade with appropriate ducting and allowance for duct system losses.

Risers 25 (made of concrete, steel, wood or composite material supporting piers) support structure 17 and are of lengths selected so that the grade of the structure can be controlled without changing grade of the terrain at the site of installation. While a multi-legged riser unit 25 is shown, a pedestal type riser could also be utilized where right-of-way acquisition is even more severely limited.

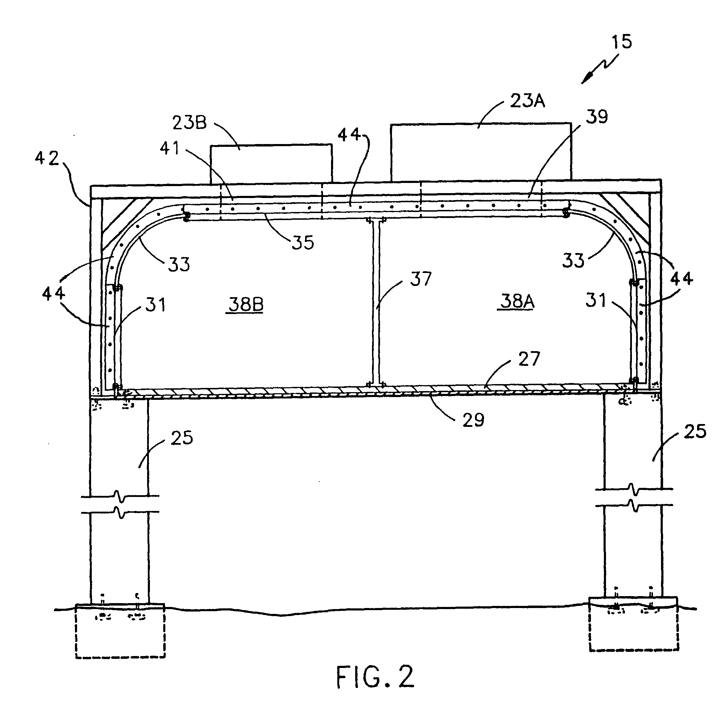

As shown in FIGURE 2, structure 17 includes vehicle support surface 27 (poured tartan, concrete, asphalt, or the like) maintained in foundation element 29 attached to side walls 31. Light transmitting wall panels 33 (transparent or translucent) are supported on walls 31 and in cover structure 35. It should be appreciated that a single unitary (for example, molded or extruded) wall could be provided in place of the multi-unit structure formed by walls 31, 33 and 35. Tunnel divider wall 37 (preferably selectively positionable, from left to right in the FIGURE) is maintained between cover structure 35 and surface 27 in the structure to divide structure 17 into discrete passageways 38A and 38B (though any number of passageways and/or lanes could be provided). The overall width of support surface 27 is selected depending on desired lane capacity as well as siting of the structure (for example, the overall structure could be wide enough to allow erection of the system over existing street right-or-ways thereby implicating no land acquisition to site the structure).

Fan units 23A and 23B are provided with ducting 39 and 41, respectively, for supply and return air functions within each passageway to provide air flow in a direction corresponding to the intended direction of travel of vehicles through each passageway (i.e., in opposite directions). The fan units are appropriately supported on support structure 42 (for example, an ironwork frame support) which in turn are mounted on risers 25.

Walls 31, 33, 37 and cover structure 35 may be constructed from common building materials such as structural steel shapes, concrete, and plastic such as Plexiglass, Lexan, or various types of recycled rigid plastic building materials (molded, blown, or heat deformation techniques may be utilized), with structure 17 preferably being assembled of discrete, transportable tunnel modules (43 in FIGURE 1) fabricated off-site. For this purpose, each of wall segments 31 and 33 and cover structure 35 include flanges 44 at their opposite ends (both ends) to facilitate interconnection of the modules, with the interconnections being appropriately sealed to preserve air flow. The interior of structure 17 should be aerodynamically smooth and, for purposes of the following disclosure, the smoothness of the surface is assumed to be approximately the same as commercial metal ductwork.

To properly provide for the desired air flow velocity in the passageways (between about 16 and 64 km/h(10 & 40 miles per hour), and preferably about 48 km/h(30 miles per hour)) proper fan capacity for fan units 23 must be determined. This is done by first determining the equivalent diameter of a circular duct by calculating the actual cross sectional area of half of structure 17 (i.e., of passageway 38A or 38B). The resulting area is then used in the formula for the area of a circle. The formula is then solved for radius and the equivalent diameter of a circular duct is thus twice the radius (the equivalent diameter referred to is for one half of the area of the interior of structure 17).

Fan capacity calculations must be corrected for the actual density of air at the installation site. For example, standard density of air at sea level is $1.2 Kg/m^3$(0.075 lbm./ft). while the density of air at 1.609km(one mile) above sea level is about $0.99 Kg/m^3$(0.062 lbm./ft). Also necessary for the air calculations is velocity pressure (VP), the pressure exerted by flowing air due to the velocity. The units for velocity pressure is the Pascal (Pa) (inches of water gauge (in. w.g.).

The airflow required to produce a desired velocity in one passageway is calculated from the standard air formula, quantity(in $m^3$/min ) [in $ft.^3$/min.] = area(in $m^2$) [in $ft.^2$] X velocity(m/min.) [in ft./min.]. Also needed for calculations of necessary fan capacity for a given installation is the friction in the passageway (i.e., the resistance to air flow that must be overcome by the pressure produced by the fans). The friction loss (Hf) is measured empirically as follows:

$$H_f = 0.0307 \times (velocity\ (ft./min.))^{0.533} / (quantity(ft.^3/min.))^{0.612}$$

This empirical formula is based on standard air of $1.2 kg/m^3$($0.075\ lb./ft.^3$) density flowing through clean, round, galvanized ducts with an equivalent sand grain roughness of 0.1524mm(0. 0005 ft.)[2].

All smooth surfaces have peaks and valleys. The mean distance between these high and low points is the absolute roughness $\varepsilon$. The relative roughness $\varepsilon/D$ of the surface in a conduit is the absolute roughness divided by the effective diameter. Because of the small value for $\varepsilon$ (0.1524mm (.000005 ft). for very smooth surfaces to 3.04mm(0.01 ft.) for very rough surfaces) and the very large value for D, the relative roughness of the tunnel will be low. smoother materials are preferred and will lower the aerodynamic resistance resulting in lower energy usage and operating cost.

The interior of structure 17 should employ as many curved walls as possible since round ducts are more effective for flowing air as compared to irregular cross sections.

Tunnel length for 248.895Pa(1" w.g.) pressure drop is used in determining the spacing of fan units 23. This value represents the length of structure 17 (with a friction loss of $H_f$) that will cause a pressure drop in the air of 248.895Pa(1" w.g.). It is calculated by:

$$Tunnel\ length\ m(ft.) = 1/(H_f\ X\ VP)$$

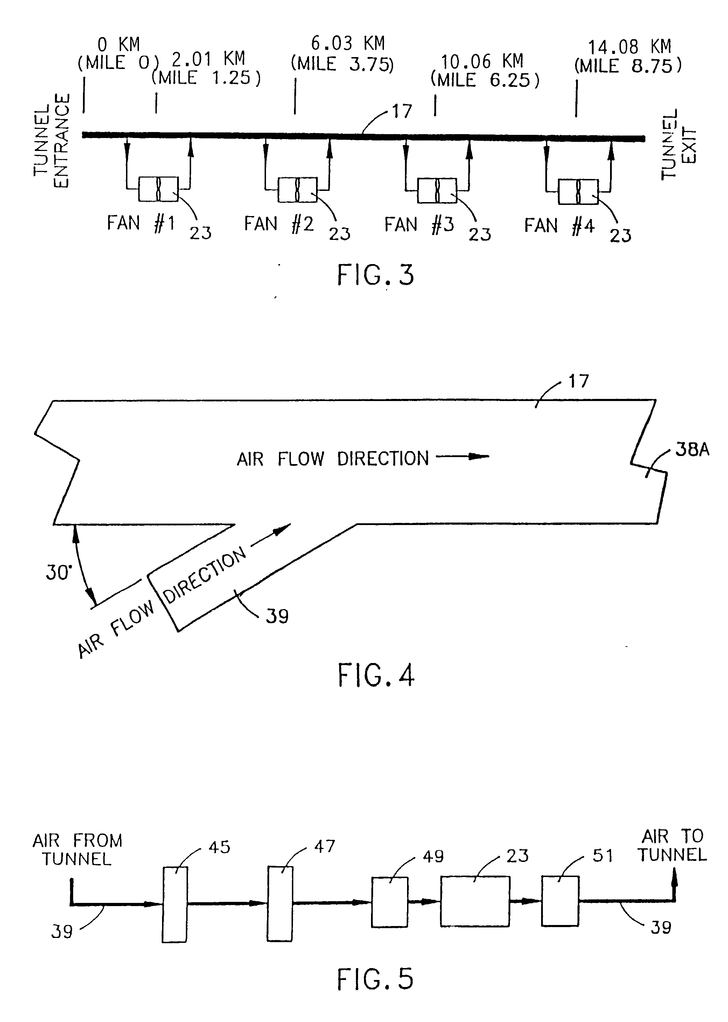

Since it may be desirable to provide air filtration, heating and/or cooling, estimates of the pressure losses associated with ducting 39/41 to remove the air from the tunnel, filter the air, heat or cool the air, and return the air to the tunnel must be accounted for. Assuming, for example, a design velocity for air in the ducts of 64.008km/h(3,500 ft./min.) (a normal velocity for this application), the design pressure drop through filter 45 (FIGURE 5) would be about 124.4475Pa (0.50 in. w.g.) As debris collects on the filter media, the pressure drop through the filter will increase. However, automatic filters are available that advance new media into the air stream when the pressure drop exceeds a set point, resulting in a reasonably constant pressure drop.

The design pressure drop through the heating and cooling equipment 47 would be about 497.79Pa(2.00 in. w.g.) This is a reasonable value and is obtained by using equipment with large cross sectional areas to minimize the pressure drop. Equipment with smaller cross sectional areas would cost less initially but would have higher pressure drops resulting in higher pressures required from the fans and thus higher operating cost.

An additional 497.79Pa(2.00 in. w.g.) of pressure drop approximately should also be foreseen for losses that will occur because of the ducts and elbows necessary to remove the air from the tunnel and return it to the passageways of structure 17.

Optional fan inlet and fan discharge silencers 49 and 51 are provided to offset noise created by high horsepower vane axial fans. Specific selection of industrial grade silencers can be made after noise data for the selected fans are obtained. All major fan manufacturers provide the necessary noise data for selection of appropriate silencers.

The velocity pressure of the air in the system shown in FIGURE 3 is added to the static losses to obtain total pressure (total pressure=static pressure 4 velocity pressure.) Total pressure is required for sizing the fan units 23.

Turning to FIGURE 4, each fan unit 23 has two duct connections to a passageway of passage structure 17, one for supply air to the fan and one for return air to the passageway. FIGURE 4 shows a typical branch connection for a duct returning air from a fan to the passageway. The connection for a duct supplying air to a fan from the passageway would appear the same except for the directions of the air flow. Both supply and return connections should be covered with heavy wire mesh to protect riders.

The branch connection from the fan to the passageway could be made into the vertical side walls 31 of the structure 17 or cover structure 35. The section of structure 17 where the connection is made would need to be constructed from a more durable material and/or reinforced or supported. Branch connections should preferably have a minimum angle between the passageway and branch duct (about 0.524 radians(30° )is practical). This will help to minimize pressure drop and to maintain air flow inside the passageway in the desired direction.

Duct sizing necessary for the design velocity is calculated by:

$$\text{area } (m^2)[ft.^2]=\text{air quantity } (m/s)[ft./min.]/\text{air velocity } (m/s)[ft./min.]$$

Since the branch duct from (or to) the fan units connects with structure 17 at an angle, the area of the opening in the walls will be larger than the cross-sectional area of the duct. This area is calculated by:

$$\text{area in tunnel wall } (m^2)[ft.^2]=\text{area in duct } (m^2)[ft.^2]/\cos(\text{entry angle})$$

The width of the opening in the tunnel wall is calculated by:

$$\text{width } (m^2)[ft.^2]=\text{area } (m^2)[ft.2]/\text{tunnel wall height } (m)[ft.]$$

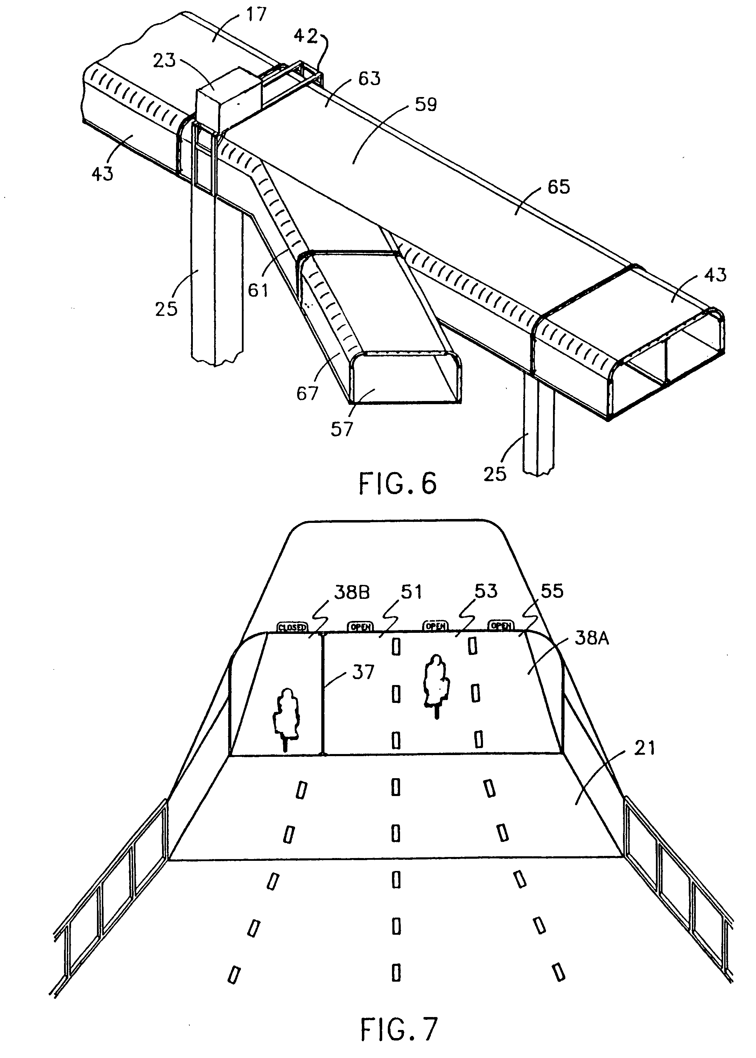

In this section of the disclosure, the requirements for fan units 23 for one lane in a passageway (as shown in FIGURE 7 multiple lanes may be provided in a single passageway 38A or 38B) are developed. One fan system per lane is beneficial because of the size availability of standard industrial vane axial fans. While larger sizes are available, they involve a higher amount of custom design and engineering by the suppliers. It is felt that larger numbers of smaller fans will allow single fans to be taken out of the system for maintenance or repair without major impact on the overall system operation.

Once the air quantity requirements for fan units 23 are obtained from the calculations set forth hereinabove, the performance characteristics for a single fan unit 23 (the maximum air pressure that the fan can develop) is determined. The system loss pressure is subtracted from the maximum pressure and the resulting pressure is the amount that is available to overcome the friction loss in the tunnel (tunnel losses (in Pa)[in. w.g.]=maximum pressure-system losses).

The equivalent length of tunnel that will use the available pressure is calculated by:

length (m)[ft.]=available pressure (in Pa)[in. w.g.] x length for 0.0254m(1") drop (m/248.89Pa)[ft./1 in. w.g.)

The fan efficiency is read from the fan performance chart. The fan brake horsepower is calculated by:

fan power (bhp)=density correction x quantity x static pressure/(efficiency x 6,356)

By way of example, for a 16.09km(ten mile) system 15 shown in FIGURE 3 and installed in Denver, Colorado (approximately 1.609km(one mile) above sea level), having a structure 17 width of 7.62m(25 feet), wall height of 3.048m (10 feet) to a cover structure peak of 3.96m(13 feet) (full cross-sectional area of 30.19m$^2$(325 square feet)), and which is designed for an air velocity in a passageway of 48.28km/h(30 miles per hour) (13.411m/s)[2,640 feet per minute] where normal wall friction losses are expected (a friction factor of 0.000222743268VP per meter (0.000730785 VP per foot) of tunnel length, and tunnel length for 248.89Pa(1"w.g.) drop of 1154.28m(3,787 ft.)), a duct design velocity of 64km/h(3,500 ft./min.) with fan units 23 having a 214,500 ACFM capacity and spaced at 4.02km(2.5 mile) intervals would be required for a single passageway lane (this assumes air handling system losses of about 1.12kPa(4.5 in. w. g.)). An initial fan unit 23 at each tunnel entrance (as shown in FIGURE 1) or branch connection (as shown in FIGURE 6) of similar capacity, while not shown in FIGURE 3, is required in most applications.

It would be preferable to interpose between ducts 39/41 and fan units 23 vibration isolation joints to minimize vibration translation from the fans to structure 17. Further, where fans are mounted above the structure 17, extensive effort should be made to further isolate vibration (for example, by mounting units 23 on a separate platform above structure 17). For side entry, fan units 23 could be mounted at grade on appropriate pads.

For fan units 23 dedicated to additional lanes of a passageway (where plural lanes are used as shown in FIGURE 7 for passageway 38A having lanes 51, 53 and 55), such units should be spaced equally over the distance to be covered by the lane and between the fan units of an adjacent lane (i.e., so that fan units of adjacent lanes are staggered over the distance to be covered by structure 17). This will provide even distribution of air velocity along the entire length of the multi-lane passageway, avoiding "dead spots" of reduced air velocity in areas between fan inlets and discharges. Even spacing of fans along the entire length of structure 17 helps to maintain a substantially constant overall air pressure along the entire length of the passageway.

Turning to FIGURE 6, an intermediate access way 57 (an intermediate entryway is shown, though ways of intermediate egress may also be provided) to structure 17 enters at the smallest safe angle possible (to minimize pressure drop at the opening) into a passageway of structure 17. For such intermediate access ways, it is preferable to minimize exit and entrance size (small as possible), maximize friction in the entrances and exits (i.e., to provide a high resistance to air flow into the intermediate access ways, for example by choice of intermediate access way wall materials and/or curvatures and/or angles of entrance and exits). In addition a high pressure wind curtain system could be utilized to minimize loss of system air. Since some loss of air at the site of such intermediate access ways is to be expected, an additional fan unit 23 may be required immediately adjacent to the entry or exit point.

As shown in FIGURE 6, for a modular system, a special intermediate module 59 is provided having access way angle entry portion 61, and tunnel portions 63 and 65 (a y-branch type of structure). Module segments 43 and ramp modules 67 are connected to provide the desired structure at the site of installation.

As may be appreciated from the foregoing, an improved transportation system, structures and methods are provided for rider propelled vehicles, the system being configured to encourage use of such vehicles as a primary mode of transportation.

**Claims**

1.  Transportation system for use in a transportation network including at least one of streets and paths for aiding movement of a rider propelled vehicle also movable by the rider over the transportation network, said system comprising:

    an open sided passage structure(17) defined by first and second spaced wall sections(31, 33) and a covering section(35) opposite an open side of said passage structure between said wall sections, said wall and covering sections formed of non-cementitious plastic material, said passage structure defining at least a first entryway (19, 21) and at least a first way of egress(19, 21) at opposite ends thereof for vehicle entrance into said system from the transportation network and vehicle exit from said system to the transportation network, respectively; a surface(27) having a width sufficient to span said space between said wall sections and extending from one node in the transportation network to another node in the transport network, said surface for movement thereover of the vehicle; means for securing said open sided passage structure over said surface with said surface at said open side, said system characterised in that;

an air moving means(23) is supported adjacent to but not supported by the passage structure and connected with the passage structure for moving air through the passage structure in a direction and at a velocity sufficient to aid movement of the vehicle through the passage structure while retaining a substantially constant overall air pressure in the passage structure between the entryway and the way of egress.

2. The transportation system of claim 1, wherein said air moving means includes conditioning means(45, 47, 49, 51) for at least one of filtering, heating and cooling said air.

3. The transportation system as claimed in any one of the preceding claims, wherein at least a part of one of said wall sections of said passage structure is made of light transmitting material.

4. The transportation system as claimed in any one of the preceding claims, wherein said air moving means has a capacity sufficient to cause average air flow velocity of between about 16 and 64km/h(ten and forty miles per hour).

5. The transportation system as claimed in any one of the preceding claims, wherein said passage structure includes at least one intermediate opening(59) therein between said first entryway and said first way of egress, said system further comprising an intermediate access way(61) structure positioned angularly relative to said passage structure and having first and second access openings(57) for ingress and egress therefrom, said intermediate access way structure being connected with said passage structure with one of said access openings corresponding to said intermediate opening of said passage structure, the other of said access openings being accessible to vehicles from the transportation network.

6. The transportation system as claimed in any one of the preceding claims, wherein said passage structure includes a plurality of modular segments(43) each secured over a part of said surface and being connected end to end to form said passage structure.

7. The transportation system as claimed in any one of the preceding claims, further comprising elevating means(25, 29) for connecting to said surface and adapted for contact above varied ground terrain when the system is installed for selectively establishing grade characteristics, including lack of grade, of said surface between said entryway and said way of egress independently from terrain grades found at the system's installation site.

8. The transportation system of claim 7, wherein said elevating means includes a plurality of risers(25), length of different ones of said risers between said surface and the terrain being selected at different locations along the distance of the transport system.

9. The transportation system as claimed in any one of the preceding claims, wherein said passage structure includes first and second passageways(38A, 38B) and at least two vehicle lanes(51, 53, 55) defined on said surface for movement thereover of the vehicles, said passageways including at least first and second access ways for vehicle entrance into and exit from said passageways, said passage structure including selectively positionable divider means(37) for defining said first and second passageways.

10. The transportation system as claimed in any one of the preceding claims, wherein said divider means is movably positionable between said passageways.

11. The transportation structure of claim 7 wherein said distance is in excess of a thousand meters.

12. A transportation system for aiding movement of rider propelled vehicles comprising:

a covered structure including first and second passageways and at least three vehicle lanes defined at a surface for movement thereover of the vehicles, said passageways including at least first and second access ways for vehicle entrance into and exit from said passageways, said covered structure including selectively positionable divider means for defining said first and second passageways, said divider means being movably positionable between selected ones of said lanes; and

air moving means mounted with said covered structure for moving air through said first passageway in an overall flow direction from said first to said second access way and for moving air through said second passageway in an overall flow direction from said second to said first access way, said air moving means having capacity to cause air flow velocity in said flow directions in said passageways sufficient to aid movement of the vehicles traveling through said passageways in said flow directions.

13. The system of claim 12 wherein said air moving means includes conditioning means for at least one of filtering, heating and cooling said air.

14. The system of claim 12 wherein said air moving means has a capacity sufficient to cause average air flow velocity in said flow directions of between about sixteen and sixty four kilometers per hour (ten and forty miles per hour).

15. The system of claim 12 wherein said covered structure includes a plurality of modular tunnel segments each having a part of said surface thereat and openings at opposite ends thereof, said tunnel segments being connected end to end to form said covered structure and said surface thereof.

16. The system of claim 15 further comprising at least one intermediate module having a surface thereat and a plurality of openings therein, first and second ones of said openings being connected at ends of different ones of said tunnel segments and a third one of said openings for receiving an intermediate access way structure thereat, said intermediate access way structure being positioned angularly relative to said covered structure and having first and second access openings for ingress and egress therefrom, said intermediate access way structure being connected with said covered structure with one of said access openings corresponding to said third opening of said intermediate module.


## Patentansprüche

1. Transportsystem zum Einsatz in einem Transportnetzwerk, welches mindestens eine zwischen Straßen und Wegen einzuklassierende Fortbewegungsstrecke aufweist, um bei der Fortbewegung eines von einem Fahrer angetriebenen Fahrzeugs behilflich zu sein, wobei das Fahrzeug ebenfalls von dem Fahrer über das Transportnetzwerk hinweg bewegt werden kann, und welches folgende Elemente enthält:

   eine Durchgangsstruktur mit offenen Seiten (17), die definiert ist durch erste und zweite unterteilte Wandabschnitte (31, 33) und durch einen Deckenabschnitt (35), gegenüber einer offenen Seite der besagten Durchgangsstruktur zwischen den besagten Wandabschnitten, wobei die Wand- und Deckenabschnitte aus einem nichtzementartigen Kunststoffmaterial hergestellt sind, wobei die Durchgangsstruktur mindestens einen ersten Eingangsweg (19, 21) und mindestens einen ersten Ausgangsweg (19,21) an gegenüberliegenden Enden derselben bestimmt, für die Einfahrt der Fahrzeuge in das System ausgehend von dem Transportnetzwerk beziehungsweise für die Ausfahrt der Fahrzeuge aus dem System hinein in das Transportnetzwerk;

   eine Fläche (27), die eine genügende Breite besitzt, um den Raum zwischen den Wandabschnitten zu überbrücken und die sich von einem Knotenpunkt in dem Transportnetzwerk hin zu einem anderen Knotenpunkt in dem Transportnetzwerk erstreckt, wobei die Fläche für die Bewegung des Fahrzeuges über dieselbe dient;

   Mittel zum Befestigen der Durchgangsstruktur mit offenen Seiten über der besagten Fläche und mit der besagten Fläche auf der besagten offenen Seite, wobei das System dadurch gekennzeichnet ist, dass:

   ein Luftbewegungsmittel (23) angrenzend an die Durchgangsstruktur abgestützt wird, aber nicht von derselben getragen wird, und mit der Durchgangsstruktur verbunden ist zwecks Bewegung der Luft durch die Durchgangsstruktur in eine Richtung und mit einer Geschwindigkeit die ausreicht, um bei der Fortbewegung des Fahrzeugs durch die Durchgangsstruktur behilflich zu sein, während ein im Wesentlichen konstanter gesamter Luftdruck in der Durchgangsstruktur zwischen dem Eingangsweg und dem Ausgangsweg beibehalten wird.

2. Transportsystem gemäß Anspruch 1, bei welchem das Luftbewegungsmittel Behandlungshilfsmittel (45, 47, 49, 51) für mindestens eine der folgenden Behandlungen der Luft enthält : Filtrieren, Erwärmen und Abkühlen.

3. Transportsystem gemäß irgendeinem der vorangehenden Ansprüche, bei welchem mindestens ein Teil eines der besagten Wandabschnitte der Durchgangsstruktur aus einem lichtdurchlässigen Material hergestellt wird.

4. Transportsystem gemäß irgendeinem der vorangehenden Ansprüche, bei welchem das Luftbewegungsmittel eine Leistung aufweist, die ausreicht um eine durchschnittliche Luftströmungsgeschwindigkeit von zwischen ungefähr 16 und 64 km/h (zehn und vierzig Meilen pro Stunde) zu verursachen.

5. Transportsystem gemäß irgendeinem der vorangehenden Ansprüche, bei welchem die Durchgangsstruktur in demselben mindestens eine Zwischenöffnung (59) zwischen dem ersten Eingangsweg und dem ersten Ausgangsweg aufweist, wobei das System ferner eine Struktur für einen Zwischenzugangsweg (61) enthält, welche unter einem Winkel in Bezug auf die Durchgangsstruktur positioniert ist und welche eine erste und eine zweite Zutrittsöffnung (57) zum Eingang in dieselbe und zum Ausgang aus derselben aufweist, wobei die Struktur für den Zwischenzugangsweg mit der Durchgangsstruktur über eine der besagten Zutrittsöffnungen verbunden ist, welche der Zwischenöffnung der Durchgangsstruktur entspricht, wobei die andere der Zutrittsöffnungen von dem Transportnetzwerk aus für die Fahrzeuge zugänglich ist.

6. Transportsystem gemäß irgendeinem der vorangehenden Ansprüche, bei welchem die Durchgangsstruktur eine große Anzahl von Modularsegmenten (43) einschließt, wobei ein jedes derselben über einen Teil der Fläche festgelegt ist und Ende gegen Ende verbunden ist, um die Durchgangsstruktur zu bilden.

7. Transportsystem gemäß irgendeinem der vorangehenden Ansprüche, welches ferner Hochstellmittel (25, 29) zur Verbindung mit der besagten Fläche umfasst, und welches geeignet ist für den Kontakt über unterschiedlichen Erdgeländen, wenn das System installiert wird, um selektiv Steigungsmerkmale einzurichten, einschließlich der Abwesenheit einer Steigung, für die besagte Fläche zwischen dem Eingangsweg und dem Ausgangsweg, unabhängig von Geländesteigungen die am Ort des Installierens des Systems vorgefunden worden sind.

8. Transportsystem gemäß Anspruch 7, bei welchem das Hochstellmittel eine große Anzahl von Zwischenstücken (25) umfasst, wobei die Länge von verschiedenen unter diesen zwischen der besagten Fläche und dem Gelände angeordneten Zwischenstücken an verschiedenen Stellen entlang der Ausdehnung des Transportsystems ausgewählt wird.

9. Transportsystem gemäß irgendeinem der vorangehenden Ansprüche, bei welchem die Durchgangsstruktur einen ersten und einen zweiten Durchgangsweg (38A, 38B) und mindestens zwei Fahrspuren (51, 53, 55) für Fahrzeuge umfasst, welche auf der besagten Fläche zur Fortbewegung der Fahrzeuge über dieselbe bestimmt sind, wobei die besagten Durchgangswege mindestens einen ersten und einen zweiten Zugangsweg aufweisen für die Einfahrt von Fahrzeugen in den Durchgangsweg und für die Ausfahrt aus demselben, wobei die Durchgangsstruktur auswählbar anzuordnende Trennungsmittel (37) zur Begrenzung des ersten und des zweiten Durchgangswegs umfasst.

10. Transportsystem gemäß irgendeinem der vorangehenden Ansprüche, bei welchem das Trennungsmittel auf entfernbare Weise zwischen den Durchgangswegen angeordnet werden kann.

11. Transportstruktur gemäß Anspruch 7, bei welcher die Entfernung größer ist als eintausend Meter.

12. Transportsystem zur Hilfeleistung bei der Fortbewegung der durch den Fahrer angetriebenen Fahrzeuge, welches die folgenden Elemente enthält:

eine überdeckte Struktur, die einen ersten und einen zweiten Durchgangsweg und mindestens drei Fahrspuren für die Fahrzeuge aufweist, welche auf einer Fläche für die Fortbewegung der Fahrzeuge über dieselbe definiert sind, wobei die Durchgangswege mindestens einen ersten und einen zweiten Zugangsweg für die Einfahrt der Fahrzeuge in die Durchgangswege und für die Ausfahrt aus denselben aufweisen, wobei die überdeckte Struktur auswählbar anzuordnende Trennungsmittel zum Definieren des ersten und des zweiten Durchgangswegs enthält, wobei das Trennungsmittel auf entfernbare Weise zwischen den ausgewählten Fahrspuren angeordnet werden kann; und

Luftbewegungsmittel, welches mit der überdeckten Struktur montiert wird zwecks Bewegung der Luft durch den ersten Durchgangsweg in einer globalen Strömungsrichtung von dem ersten Zugangsweg aus hin zu dem zweiten Zugangsweg und zur Bewegung der Luft durch den zweiten Durchgangsweg in einer globalen Strömungsrichtung von dem zweiten Zugangsweg aus hin zu dem erstem Zugangsweg, wobei das Luftbewegungsmittel die Fähigkeit besitzt, die Luftströmungsgeschwindigkeit in den besagten Strömungsrichtungen in den Durchgangswegen auf eine solche Weise zu beeinflussen, die ausreicht, um bei der Fortbewegung der Fahrzeuge behilflich zu sein, welche sich in den Strömungsrichtungen durch die Durchgangswege hindurchbewegen.

13. System gemäß Anspruch 12, bei welchem das Luftbewegungsmittel ein Behandlungshilfsmittel für mindestens eine der folgenden Behandlungen der Luft enthält: Filtrieren, Erwärmen und Abkühlen.

14. System gemäß Anspruch 12, bei welchem das Luftbewegungsmittel eine Leistung aufweist, die ausreicht um eine durchschnittliche Luftströmungsgeschwindigkeit in den Strömungsrichtungen von zwischen ungefähr 16 und 64 km/h (zehn und vierzig Meilen pro Stund) zu verursachen.

15. System gemäß Anspruch 12, bei welchem die überdeckte Struktur eine große Anzahl von modularen Tunnelsegmenten umfasst, wobei ein jedes derselben einen Abschnitt der Fläche bei sich und Öffnungen an seinen gegenüberliegenden Enden besitzt, wobei die Tunnelsegmente Ende gegen Ende verbunden sind, um die besagte überdeckte Struktur und die Fläche derselben zu bilden.

16. System gemäß Anspruch 15, welches ferner mindestens ein Zwischenmodul enthält mit einer Fläche bei demselben und mit einer großen Anzahl von Öffnungen in demselben, wobei die erste und die zweite der Öffnungen an den Enden von verschiedenen der Tunnelsegmente verbunden sind und eine dritte der Öffnungen zum Aufnehmen einer Struktur eines Zwischenzugangswegs bei derselben dient, wobei die Struktur für den Zwischenzugangsweg unter einem Winkel in Bezug auf die überdeckte Struktur positioniert ist und eine erste und eine zweite Zutrittöffnung zum Eingang und zum Austritt aus derselben aufweist, wobei die Struktur für den Zwischenzugangsweg verbunden ist mit der überdeckten Struktur mit einer der Zutrittöffnungen, welche der dritten Öffnung in dem Zwischenmodul entspricht.


## Revendications

1. Système de transport à utiliser dans un réseau de transport englobant au moins un élément choisi parmi le groupe comprenant des rues et des voies, pour favoriser le mouvement d'un véhicule propulsé par un cycliste et apte à se mouvoir sous l'action du cycliste dans le réseau de transport, ledit système comprenant:

   une structure de passage à côté ouvert (17) définie par des premier et deuxième profilés de parois espacés (31, 33) et par un profilé de recouvrement (35) opposé au côté ouvert de ladite structure de passage entre lesdits profilés de parois, lesdits profilés de parois et de recouvrement étant formés à partir d'une matière plastique exempte d'agent de collage, ladite structure de passage définissant au moins une première voie d'entrée (19, 21) et au moins une première voie de sortie (19, 21) à ses extrémités opposées pour l'entrée de véhicules dans ledit système depuis le réseau de transport et pour la sortie de véhicules depuis ledit système dans le réseau de transport, respectivement;
   une surface (27) possédant une largeur suffisante pour surplomber ledit espace entre lesdits profilés de parois et s'étendant depuis un noeud dans le réseau de transport jusqu'à un autre noeud dans le réseau de transport, ladite surface étant destinée au mouvement des véhicules;
   des moyens pour fixer ladite structure de passage à côté ouvert par-dessus ladite surface, ladite surface se trouvant à l'endroit occupé par ledit côté ouvert, ledit système étant caractérisé en ce que:
   un moyen de déplacement d'air (23) est supporté en position adjacente à la structure de passage, sans être supporté par la structure de passage, et est relié à la structure de passage pour déplacer de l'air à travers la structure de passage dans une direction et à une vitesse suffisante pour favoriser le mouvement des véhicules à travers ladite structure de passage tout en maintenant une pression d'air globale essentiellement constante dans la structure de passage entre la voie d'entrée et la voie de sortie.

2. Système de transport selon la revendication 1, dans lequel ledit moyen de déplacement d'air englobe des moyens de conditionnement (45, 47, 49, 51) pour au moins une action faisant partie du groupe d'actions consistant à filtrer ledit air, chauffer ledit air et refroidir ledit air.

3. Système de transport selon l'une quelconque des revendications précédentes, dans lequel au moins une partie d'un desdits profilés de parois de ladite structure de passage est réalisée en une matière transmettant la lumière.

4. Système de transport selon l'une quelconque des revendications précédentes, dans lequel ledit moyen de déplacement d'air possède une capacité suffisante pour générer une vitesse d'écoulement d'air moyenne entre environ 16 et 64 km/h (entre dix et quarante miles par heure).

5. Système de transport selon l'une quelconque des revendications précédentes, dans lequel ladite structure de passage englobe au moins une ouverture intermédiaire (59) entre ladite première voie d'entrée et ladite première voie de sortie, ledit système comprenant en outre une structure de voie d'accès intermédiaire (61) positionnée en formant un angle par rapport à ladite structure de passage et possédant des première et deuxième ouvertures d'accès (57) pour l'entrée et la sortie, ladite structure de voie d'accès intermédiaire étant reliée à ladite structure de passage de telle sorte qu'une desdites ouvertures d'accès correspond à ladite ouverture intermédiaire de ladite structure de passage, l'autre ouverture d'accès étant accessible à des véhicules provenant du réseau de transport.

6. Système de transport selon l'une quelconque des revendications précédentes, dans lequel ladite structure de passage englobe plusieurs segments modulaires (43) fixés respectivement à une partie de ladite surface et reliés bout à bout pour former ladite structure de passage.

7. Système de transport selon l'une quelconque des revendications précédentes, comprenant en outre des moyens d'élévation (25, 29) destinés à se relier à ladite surface et conçus pour entrer en contact avec un terrain de base varié lorsque le système est monté pour établir de manière sélective des caractéristiques de dénivellation, y compris une absence de dénivellation, de ladite surface entre ladite voie d'entrée et ladite voie de sortie, indépendamment de dénivellations de terrains rencontrées au site de montage du système.

8. Système de transport selon la revendication 7, dans lequel lesdits moyens d'élévation englobent plusieurs élévateurs (25), la longueur de différents élévateurs parmi lesdits élévateurs entre ladite surface et le terrain étant sélectionnée à différents endroits sur la distance du système de transport.

9. Système de transport selon l'une quelconque des revendications précédentes, dans lequel ladite structure de passage englobe des premier et deuxième passages (38A, 38B) et au moins deux pistes cyclables (51, 53, 55) définies sur ladite surface destinée au mouvement des véhicules, lesdits passages englobant au moins des première et deuxième voies d'accès pour l'entrée des véhicules dans lesdits passages et pour la sortie des véhicules hors desdits passages, ladite structure de passage englobant des moyens de séparation (37) qui peuvent être positionnés de manière sélective pour définir lesdits premier et deuxième passages.

10. Système de transport selon l'une quelconque des revendications précédentes, dans lequel lesdits moyens de séparation peuvent être positionnés de manière mobile entre lesdits passages.

11. Structure de transport selon la revendication 7, dans laquelle ladite distance est supérieure à mille mètres.

12. Système de transport pour favoriser le mouvement de véhicules propulsés par des cyclistes, comprenant:

une structure couverte englobant des premier et deuxième passages et au moins trois pistes cyclables définies sur une surface pour le déplacement des véhicules, lesdits passages englobant au moins des première et deuxième voies d'accès pour l'entrée des véhicules dans lesdits passages et pour la sortie des véhicules hors desdits passages, ladite structure couverte englobant des moyens de séparation qui peuvent être positionnés de manière sélective pour définir lesdits premier et deuxième passages, lesdits moyens de séparation pouvant être positionnés de manière mobile entre des pistes cyclables sélectionnées parmi lesdites pistes cyclables; et un moyen de déplacement d'air monté avec ladite structure couverte pour déplacer de l'air à travers ledit premier passage dans une direction d'écoulement global depuis ladite première voie d'accès jusqu'à ladite deuxième voie d'accès et pour déplacer de l'air à travers ledit deuxième passage dans une direction d'écoulement global depuis ladite deuxième voie d'accès jusqu'à ladite première voie d'accès, ledit moyen de déplacement d'air ayant la capacité de générer une vitesse d'écoulement d'air dans lesdites directions d'écoulement dans lesdits passages suffisante pour favoriser le mouvement des véhicules se déplaçant à travers lesdits passages dans lesdites directions d'écoulement.

13. Système selon la revendication 12, dans lequel ledit moyen de déplacement d'air englobe des moyens de conditionnement pour au moins une action faisant partie du groupe d'actions consistant à filtrer ledit air, chauffer ledit air et refroidir ledit air.

14. Système selon la revendication 12, dans lequel ledit moyen de déplacement d'air possède une capacité suffisante pour générer une vitesse d'écoulement d'air moyenne dans lesdites directions d'écoulement entre environ 16 et 64 km/h (entre dix et quarante miles par heure).

15. Système selon la revendication 12, dans lequel ladite structure couverte englobe plusieurs segments de tunnel modulaire possédant chacun une partie de ladite surface, ainsi que des ouvertures à leurs extrémités opposées, lesdits segments de tunnels étant reliés bout à bout pour former ladite structure couverte et ladite surface de cette dernière.

16. Système selon la revendication 15, comprenant en outre au moins un module intermédiaire possédant une surface et plusieurs ouvertures, les première et deuxième ouvertures parmi lesdites ouvertures étant reliées à des extrémités de différents segments de tunnels parmi lesdits segments de tunnels et une troisième desdites ouvertures étant destinée à recevoir une structure de voie d'accès intermédiaire, ladite structure de voie d'accès intermédiaire étant positionnée en formant un angle par rapport à ladite structure couverte et possédant des première et seconde ouvertures d'accès pour l'entrée et la sortie, ladite structure de voie d'accès intermédiaire étant reliée à ladite structure couverte, une desdites ouvertures d'accès correspondant à ladite troisième ouverture dudit module intermédiaire.

FIG. 1

FIG.2

0 KM
(MILE 0) 2.01 KM
(MILE 1.25)

6.03 KM
(MILE 3.75)

10.06 KM
(MILE 6.25)

14.08 KM
(MILE 8.75)

TUNNEL ENTRANCE

17

TUNNEL EXIT

FAN #1    23

FAN #2    23

FAN #3    23

FAN #4    23

FIG. 3

17

AIR FLOW DIRECTION →

38A

30°

AIR FLOW DIRECTION →

39

FIG. 4

AIR FROM TUNNEL

45    47    49    23    51

AIR TO TUNNEL

39

39

FIG. 5

FIG. 6

FIG. 7